Europäisches Patentamt

European Patent Office

Office européen des brevets

(19)

(11) **EP 0 847 421 B1**

(12) **EUROPÄISCHE PATENTSCHRIFT**

(45) Veröffentlichungstag und Bekanntmachung des Hinweises auf die Patenterteilung:
**21.07.1999 Patentblatt 1999/29**

(21) Anmeldenummer: **96930140.7**

(22) Anmeldetag: **30.08.1996**

(51) Int Cl.$^6$: **C08L 33/12**, C08L 25/12, C08L 51/00

(86) Internationale Anmeldenummer:
**PCT/EP96/03822**

(87) Internationale Veröffentlichungsnummer:
**WO 97/08241 (06.03.1997 Gazette 1997/11)**

(54) **THERMOPLASTISCHE FORMMASSEN MIT GERINGEM STREULICHTANTEIL**

THERMOPLASTIC MOULDING COMPOUNDS WITH A REDUCED DIFFUSED LIGHT PORTION

MATIERES DE MOULAGE THERMOPLASTIQUES A LUMIERE DIFFUSEE REDUITE

(84) Benannte Vertragsstaaten:
**BE CH DE ES FR GB IT LI NL**

(30) Priorität: **31.08.1995 DE 19532047**
**31.08.1995 DE 19532046**

(43) Veröffentlichungstag der Anmeldung:
**17.06.1998 Patentblatt 1998/25**

(73) Patentinhaber: **BASF AKTIENGESELLSCHAFT**
**67056 Ludwigshafen (DE)**

(72) Erfinder:
 • **TIEFENSEE, Kristin**
**D-67368 Westheim (DE)**
 • **NEUMANN, Rainer**
**D-67112 Mutterstadt (DE)**

(74) Vertreter: **Isenbruck, Günter, Dr. et al**
**Patent- und Rechtsanwälte**
**Bardehle-Pagenberg-Dost-Altenburg-Geissler-Isenbruck**
**Theodor-Heuss-Anlage 12**
**68165 Mannheim (DE)**

(56) Entgegenhaltungen:
**EP-A- 0 062 223**

**Beschreibung**

Die vorliegende Erfindung betrifft thermoplastische Formmassen, enthaltend eine Mischung aus

(A) 10 bis 60 Gew.-% eines Methylmethacrylat-Polymerisates, erhältlich durch Polymerisation einer Mischung, bestehend aus

(A1) 90 bis 100 Gew.-%, bezogen auf (A), Methylmethacrylat, und

(A2) 0 bis 10 Gew.-%, bezogen auf (A), eines $C_1$-$C_8$-Alkylesters der Acrylsäure

und

(B) 10 bis 70 Gew.-% eines Copolymerisates, erhältlich durch Polymerisation einer Mischung, bestehend aus

(B1) 75 bis 88 Gew.-%, bezogen auf (B), eines vinylaromatischen Monomeren und

(B2) 12 bis 25 Gew.-%, bezogen auf (B), eines Vinylcyanids

und

(C) 15 bis 50 Gew.-% eines Pfropfcopolymerisates, erhältlich aus

(C1) 40 bis 80 Gew.-%, bezogen auf (C), eines Kerns, erhältlich durch Polymerisation eines Monomerengemisches, bestehend aus

(C11) 65 bis 90 Gew.-% eines 1,3-Diens und

(C12) mindestens 10 Gew.-% eines vinylaromatischen Monomeren

und

(C2) 10 bis 30 Gew.-%, bezogen auf (C), einer ersten Pfropfhülle, erhältlich durch Polymerisation eines Monomerengemisches, bestehend aus (wobei sich die einzelnen Prozentangaben C21, C22 und C23 zu 100 Gew.-% addieren)

(C21) 30 bis 60 Gew.-% eines vinylaromatischen Monomeren

(C22) 40 bis 60 Gew.-% eines $C_1$-$C_8$-Alkylesters der Methacrylsäure und

(C23) 0 bis 2 Gew.-% eines vernetzenden Monomeren

und

(C3) 10 bis 30 Gew.-%, bezogen auf (C), einer zweiten Pfropfhülle, erhältlich durch Polymerisation eines Monomerengemisches, bestehend aus

(C31) 70 bis 98 Gew.-% eines $C_1$-$C_8$-Alkylesters der Methacrylsäure und

(C32) 2 bis 30 Gew.-% eines $C_1$-$C_8$-Alkylesters der Acrylsäure,

wobei sich die einzelnen Prozentangaben aus A, B und C in der Mischung zu 100 Gew.-% addieren und

(D) gegebenenfalls üblichen Zusatzstoffen in Mengen von bis zu 20 Gew.-%, bezogen auf die Summe der Komponenten A, B und C,
mit den Maßgaben, daß das Mengenverhältnis von (C2) zu (C3) im Bereich von 2:1 bis 1:2 liegt, der Brechungsindex der ersten Pfropfhülle ($n_D$-C2) größer als der Brechungsindex der zweiten Pfropfhülle ($n_D$-C3) ist und der Brechungsindex der Gesamtpfropfhülle ($n_D$-C2+$n_D$-C3) kleiner als der Brechungsindex des Kerns ($n_D$-C1) ist, wobei der Betrag der Differenz aus Brechungsindex der Gesamtkomponente C ($n_D$-C) und dem der Gesamtmatrix ($n_D$-A+$n_D$-B) kleiner oder gleich 0,02 ist.

Weiterhin betrifft die vorliegende Erfindung ein Verfahren zur Herstellung der erfindungsgemaßen thermoplastischen Formmassen, deren Verwendung und die daraus erhältlichen Formkörper.

Aus der EP-A 00 62 223 sind hochglänzende, transparente, schlagzähe, thermoplastische Formmassen bekannt, die aus einem harten Methylmethacrylat-Polymerisat, einem harten Styrol/Acrylnitril-Polymerisat und einem weichen Pfropfcopolymerisat von Alkyl(meth)acrylat und gegebenenfalls Styrol auf einem Kautschuk bestehen. Die dabei beschriebenen thermoplastischen Formmassen zeigen auch eine gute Spannungsdßbeständigkeit.

Für einige Anwendungsbereiche, u.a. bei Geräteabdeckungen beispielsweise bei Büromaschinen oder Kopiergeräten, benötigt man aber thermoplastische Formmassen, die darüber hinaus neben einem guten Fließverhalten noch eine hohe Transmission und einen geringen Streulichtanteil aufweisen.

Die US-A 4,083,896 beschreibt ebenfalls transparente Mischungen aus einem harten Methylmethacrylat-Polymerisat und einem harten Styrol/Acrylnitril-Polymerisat, die aber mit Kautschuken aus Butadien, Acrylnitril und Styrol modifiziert werden. Derartige transparente Mischungen weisen einen relativ hohen Gelbwert auf, der für die obengenannten Anwendungsbereiche nicht mehr toleriert werden kann.

Die bei der EP-A 00 62 223 verwendeten Kautschuke auf der Basis eines weichen Pfropfcopolymerisats von Alkyl(meth)acrylat werden vor allem zur Erhöhung der Schlagzähigkeit eingesetzt. Solche Kautschuke können auch zur Modifizierung von Polyvinylchlorid (PVC) verwendet werden (EP-A 0 082 717, AU-A 9180-213, DE-A 39 38 877).

Weiterhin ist aus der GB-A 2 156 365 bekannt, Copolymerisate auf der Basis von Methylmethacrylat und Styrol mit einem Pfropfcopolymerisat aus Butadien, Styrol und Methylmethacrylat zu modifizieren, wobei dieses Pfropfcopolymerisat nur eine Pfropfhülle aufweist. Die dabei erhaltenen Mischungen weisen aber für einige Anwendungsbereiche keine ausreichend hohe Schlagzähigkeit auf.

Der vorliegenden Erfindung liegt daher die Aufgabe zugrunde, den geschilderten Nachteilen abzuhelfen und verbesserte thermoplastische Formmassen zu entwickeln, die eine gute Schlagzähigkeit und eine hohe Fließrähigkeit aufweisen und sich ferner durch eine hohe Transmission und einen geringen Streulichtanteil auszeichnen. Außerdem sollten sich die Formmassen zu Formteilen verarbeiten lassen, die einen möglichst geringen Kantengelbstich aufweisen.

Die Lösung dieser Aufgabe sind die eingangs definierten thermoplastischen Formmassen. Weitere Lösungen sind ein Verfahren zu deren Herstellung, ihre Verwendung zur Herstellung von Formkörpern sowie Formkörper, hergestellt aus den erfindungsgemäßen thermoplastischen Formmassen.

Die erfindungsgemäßen thermoplastischen Formmassen enthalten in bevorzugten Ausführungsformen Mischungen aus

(A) 20 bis 50 Gew.-% eines Methylmethacrylat-Polymerisates, erhältlich durch Polymerisation einer Mischung, bestehend aus

(A1) 92 bis 98 Gew.-%, bezogen auf (A), Methylmethacrylat, und

(A2) 2 bis 8 Gew.-%, bezogen auf (A), eines $C_1$-$C_8$-Alkylesters der Acrylsäure

und

(B) 20 bis 40 Gew.-% eines Copolymerisates, erhältlich durch Polymerisation einer Mischung, bestehend aus

(B1) 79 bis 85 Gew.-%, bezogen auf (B), eines vinylaromatischen Monomeren und

(B2) 15 bis 21 Gew.-%, bezogen auf (B), eines Vinylcyanids

und

(C) 20 bis 40 Gew.-% eines Pfropfcopolymerisates, erhältlich aus

(C1) 50 bis 75 Gew.-%, bezogen auf (C), eines Kerns, erhältlich durch Polymerisation eines Monomerengemisches, bestehend aus

(C11) 70 bis 85 Gew.-% eines 1,3-Diens und

(C12) 15 bis 30 Gew.-% eines vinylaromatischen Monomeren

und

(C2) 10 bis 25 Gew.-%, bezogen auf (C), einer ersten Pfropfhülle, erhältlich durch Polymerisation eines Monomerengemisches, bestehend aus (wobei sich die einzelnen Prozentangaben aus C21, C22 und C23 zu 100 Gew.-% addieren)

(C21) 40 bis 50 Gew.-% eines vinylaromatischen Monomeren

(C22) 40 bis 55 Gew.-% eines $C_1$-$C_8$-Alkylesters der Methacrylsäure und

(C23) 0 bis 1,2 Gew.-% eines vernetzenden Monomeren

und

(C3) 10 bis 25 Gew.-%, bezogen auf (C), einer zweiten Pfropfhülle, erhältlich durch Polymerisation eines Monomerengemisches, bestehend aus

(C31) 75 bis 92 Gew.-% eines $C_1$-$C_8$-Alkylesters der Methacrylsäure und

(C32) 8 bis 25 Gew.-% eines $C_1$-$C_8$-Alkylesters der Acrylsäure

wobei sich die einzelnen Prozentangaben aus A, B und C in der Mischung zu 100 Gew.-% addieren und

(D) gegebenenfalls üblichen Zusatzstoffen in Mengen von 0 bis 10 Gew.-%, bezogen auf die Summe der Komponenten A, B und C.

Die in den erfindungsgemäßen thermoplastischen Formmassen verwendeten Methylmethacrylat-Polymerisate (A) sind entweder Homopolymerisate aus Methylmethacrylat (MMA) oder Copolymerisate aus MMA mit bis zu 10 Gew.-%, bezogen auf (A), eines $C_1$-$C_8$-Alkylesters der Acrylsäure.

Als $C_1$-$C_8$-Alkylester der Acrylsäure (Komponente A2) kann man Methylacrylat, Ethylacrylat, Propylacrylat, n-Butylacrylat, n-Pentylacrylat, n-Hexylacrylat, n-Heptylacrylat, n-Octylacrylat und 2-Ethylhexylacrylat sowie Mischungen davon einsetzen, vorzugsweise Methylacrylat, Ethylacrylat, n-Butylacrylat, 2-Ethylhexylacrylat oder Mischungen davon, besonders bevorzugt Methylacrylat.

Die Methylmethacrylat(MMA)-Polymerisate können durch Substanz-, Lösungs- oder Perlpolymerisation nach bekannten Methoden hergestellt werden (siehe beispielsweise Kunststoff-Handbuch, Band IX, "Polymethacrylate", Vieweg/Esser, Carl-Hanser-Verlag 1975) und sind im Handel erhältlich. Bevorzugt setzt man MMA-Polymerisate ein, deren Gewichtsmittel-Werte Mw der Molmassen im Bereich von 60.000 bis 300.000 liegen (bestimmt durch Lichtstreuung in Chloroform).

Die Komponente (B) ist ein Copolymerisat aus einem vinylaromatischen Monomeren (B1) und Vinylcyanid (B2).

Als vinylaromatische Monomere (Komponente B1) kann man Styrol, ein- bis dreifach mit $C_1$-$C_8$-Alkylresten substituiertes Styrol wie p-Methylstyrol oder tert.-Butylstyrol sowie $\alpha$-Methylstyrol, bevorzugt Styrol, einsetzen.

Als Vinylcyanid (Komponente B2) kann man Acrylnitril und/oder Methacrylnitril, bevorzugt Acrylnitril, einsetzen.

Außerhalb des oben angegebenen Bereiches der Zusammensetzung der Komponente (B) erhält man üblicherweise bei Verarbeitungstemperaturen über 240°C trübe Formmassen, die Bindenähte aufweisen.

Die Copolymerisate (B) können nach bekannten Verfahren hergestellt werden, wie durch Substanz-, Lösungs-, Suspensions- oder Emulsions-Polymerisation, bevorzugt durch Lösungspolymerisation (siehe GB-A 1 472 195). Bevorzugt sind dabei Copolymerisate (B) mit Molmassen Mw von 60.000 bis 300.000, bestimmt durch Lichtstreuung in Dimethylformamid.

Als Komponente (C) wird ein Pfropfcopolymerisat verwendet, aus einem Kern (C1) und zweier darauf aufgebrachter Pfropfhüllen (C2) und (C3).

Der Kern (C1) stellt die Pfropfgrundlage dar und weist einen Quellungsindex QI von 15 bis 40, insbesondere von 20 bis 35 auf, bestimmt durch Quellungsmessung in Toluol bei Raumtemperatur.

Als 1,3-Dien (Komponente C11) des Kerns des Pfropfcopolymerisats (Komponente C1) kann man Butadien und/oder Isopren einsetzen.

Als vinylaromatisches Monomer (Komponente C12) kann man Styrol oder ein in $\alpha$-Stellung oder vorzugsweise am Kern mit einer (oder am Kern auch mehreren) $C_1$-$C_8$-Alkylgruppe(n), vorzugsweise Methyl, substituiertes Styrol einsetzen.

Bevorzugt weist der Kern des Pfropfcopolymerisats eine Glasübergangstemperatur von kleiner als 0°C auf. Die mittlere Teilchengröße des Kerns liegt im Bereich von 30 bis 250 nm, besonders bevorzugt im Bereich von 50 bis 180 nm. Üblicherweise stellt man den Kern durch Emulsionspolymerisation her (siehe beispielsweise Encyclopedia of Polymer Science and Engineering, Vol. 1, S. 401 ff).

Auf den Kern (C1) wird die Pfropfhülle (C2) aufgebracht, welche die Monomere (C21), (C22) und gegebenenfalls (C23) enthält.

Als vinylaromatisches Monomer (Komponente C21) kann man Styrol oder ein in A-Stellung oder vorzugsweise am Kern mit einer (oder am Kern auch mehreren) $C_1$-$C_8$-Alkylgruppe(n), vorzugsweise Methyl, substituiertes Styrol einsetzen.

Als $C_1$-$C_8$-Alkylester der Methacrylsäure (Komponente C22) verwendet man erfindungsgemäß Methylmethacrylat ("MMA"), Ethylmethacrylat, n-, 1-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere.

Als Monomere (C23) können übliche vernetzend wirkende Monomere eingesetzt werden, also im wesentlichen di -oder polyfunktionelle Comonomere, insbesondere Alkylenglykoldi(meth)acrylate wie Ethylen-, Propylen- und Butylenglykoldi(meth)acrylat, Allylmethacrylat, (Meth)acrylate von Glycerin, Trimethylolpropan, Pentaerythrit oder Vinylbenzole wie Di- oder Trivinylbenzol.

Auf die Pfropfhülle (C2) wiederum wird eine weitere Pfropfhülle (C3) aufgebracht, welche die Monomere (C31) und (C32) aufweist. Die Monomere (C31) sind $C_1$-$C_8$-Alkylester der Methacrylsäure, bei den Monomeren (C32) handelt es sich um $C_1$-$C_8$-Alkylester der Acrylsäure.

Als $C_1$-$C_8$-Alkylester der Methacrylsäure (Monomere C31) verwendet man erfindungsgemäß Methylmethacrylat ("MMA"), Ethylmethacrylat, n-, 1-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethacrylat oder 2-Ethylhexylmethacrylat, wobei Methylmethacrylat besonders bevorzugt ist, sowie Mischungen dieser Monomere.

Als $C_1$-$C_8$-Alkylester der Acrylsäure (Monomere C32) kann man Methylacrylat ("MA"), Ethylacrylat, Propylacrylat, n-Butylacrylat, Isobutylacrylat, sek.-Butylacrylat, tert.-Butylacrylat, Pentylacrylat, Hexylacrylat, Heptylacrylat, Octylacrylat oder 2-Ethylhexylacrylat, wobei Methylacrylat besonders bevorzugt ist, sowie Mischungen dieser Monomere untereinander einsetzen.

Die Herstellung der beiden Pfropfhüllen (C2) und (C3) erfolgt in Gegenwart des Kerns (C1) nach literaturbekannten Methoden, insbesondere durch Emulsionspolymerisation (Encyclopedia of Polymer Science and Engineering, Vol. 1, Seite 401 ff.). Durch die dabei angewandte sogenannte Saatfahrweise werden bei der Herstellung der beiden Pfropfhüllen keine neuen Teilchen gebildet. Darüber hinaus ermöglicht es die Saatfahrweise, die Zahl und die Art der Teilchen in beiden Pfropfstufen durch die Menge und die Art des eingesetzten Emulgators zu bestimmen. Die Emulsionspolymerisation wird üblicherweise durch Polymerisationsinitiatoren ausgelöst.

Bei der Emulsionspolymerisation können ionogene und nichtionogene Emulgatoren verwendet werden. Geeignete Emulgatoren sind beispielsweise Dioctylnatriumsulfosuccinat, Natriumlaurylsulfat, Natriumdodecylbenzolsulfonat, Alkylphenoxypolyethylensulfonate und Salze von langkettigen Carbon- und Sulfonsäuren. Als nichtionogene Emulgatoren sind beispielsweise Fettalkoholpolyglykolether, Alkylarylpolyglykolether, Fettsäuremonoethanolamide sowie ethoxylierte Fettsäureamide und -amine geeignet. Bezogen auf das Gesamtgewicht des Emulsionspfropfcopolymerisates liegt die Gesamtemulgatormenge vorzugsweise bei 0,05 bis 5 Gew.-%.

Als Polymerisationsinitiatoren können Ammonium- und Alkaliperoxodisulfate wie Kaliumperoxodisulfat sowie Initiatorkombinationssysteme wie Natriumpersulfat, Natriumhydrosulfit, Kaliumpersulfat, Natriumformaldehydsulfoxylat und Kaliumperoxodisulfat, Natriumdithionit-Eisen-II-sulfat verwendet werden, wobei die Polymerisationstemperatur im Fall der thermisch zu aktivierenden Ammonium-und Alkaliperoxodisulfate bei 50 bis 100°C und bei den Initiatorkombinationen, die als Redoxsysteme wirksam sind, darunter liegen kann, etwa im Bereich von 20 bis 50°C. Die gesamte Initiatormenge liegt vor; zugsweise zwischen 0,02 und 1,0 Gew.-%, bezogen auf das fertige Emulsionspolymerisat.

Sowohl bei der Herstellung der Grundstufe, d.h. des Kerns (C1), als auch bei der Herstellung der beiden Pfropfstufen, d.h. der beiden Pfropfhüllen (C2) und (C3), können ferner Polymerisationsregler eingesetzt werden. Als Polymerisationsregler dienen u.a. Alkylmercaptane wie beispielsweise n- oder tert.-Dodecylmercaptan. Die Polymerisationsregler werden üblicherweise in einer Menge von 0,01 bis 1,0 Gew.-%, bezogen auf die jeweilige Stufe, eingesetzt.

Im übrigen wird das erfindungsgemäß zu verwendende Emulsionspfropfcopolymerisat so hergestellt, daß man eine wäßrige Mischung, bestehend aus Monomeren, Vernetzer, Emulgator, Initiator, Regler und einem Puffersystem in einem mit Stickstoffinertisierten Reaktor vorlegt, in der Kälte unter Rühren inertisiert und dann im Laufe von 15 bis 120 Minuten auf die Polymerisationstemperatur bringt. Anschließend wird bis zu einem Umsatz von mindestens 95% polymerisiert. Monomere, Vernetzer, Emulgator, Initiator und Regler können auch komplett oder teilweise als Zulauf der wäßrigen Vorlage zugeführt werden.

Gegebenenfalls nach einer Nachreaktionszeit von 15 bis 120 Minuten werden die Stufen (C2) und (C3) unter Zulauf der Monomeren in Gegenwart der bereits gebildeten Stufe (C1) durch Emulsionspolymerisation erzeugt.

Die Isolierung des Emulsionspfropfcopolymerisates aus dem erhaltenen Latex erfolgt auf bekannte Weise durch Ausfällung, Filtration und anschließende Trocknung. Für die Ausfällung können beispielsweise wäßrige Lösungen von anorganischen Salzen wie Natriumchlorid, Natriumsulfat, Magnesiumsulfat und Calciumchlorid, wäßrige Lösungen von Salzen der Ameisensäure wie Magnesiumformiat, Calciumformiat und Zinkformiat, wäßrige Lösungen von anorganischen Säuren wie Schwefel-und Phosphorsäure sowie wäßrige ammoniakalische und aminische Lösungen sowie andere wäßrige alkalische Lösungen, z.B. von Natrium-und Kaliumhydroxid verwendet werden.

Die Trocknung kann beispielsweise durch Gefrier-, Sprüh-, Wirbelschicht- und Umlufttrocknung erfolgen.

Das Pfropfcopolymerisat (C) weist vorzugsweise einen Quellungsindex QI von 10 bis 40, insbesondere von 12 bis 35 auf. Der Quellungsindex wird dabei durch Quellungsmessung in Toluol bei Raumtemperatur bestimmt.

Als übliche Zusatzstoffe (D) kommen alle solchen Substanzen in Betracht, die sich in den Komponenten (A), (B) und (C) gut lösen. Geeignete Zusatzstoffe sind Farbstoffe, Stabilisatoren, Schmiermittel und Antistatika.

Das Vermischen der Komponenten (A), (B), (C) und gewünschtenfalls (D) nimmt man üblicherweise nach dem ebenfalls erfindungsgemäßen Verfahren in der Schmelze bei Temperaturen im Bereich von 200 bis 300°C, insbesondere bei 200 bis 280°C vor.

Die erfindungsgemäßen thermoplastischen Formmassen zeichnen sich ferner u.a. dadurch aus, daß das Mengenverhältnis der ersten Pfropfhülle (C2) zur zweiten Pfropfhülle (C3) im Bereich von 2:1 bis 1:2 liegt und der Brechungsindex der ersten Pfropfhülle ($n_D$-C2) größer ist als der Brechungsindex der zweiten Pfropfhülle ($n_D$-C3). Vorzugsweise ist der Brechungsindex der ersten Pfropfhülle ($n_D$-C2) wenigstens um 2 %, insbesondere um wenigstens 3 %, größer als der Brechungsindex der zweiten Pfropfhülle ($n_D$-C3).

Weiterhin sind die erfindungsgemäßen thermoplastischen Formmassen dadurch charakterisiert, daß der Brechungsindex der Gesamtpfropfhülle ($n_D$-C2+$n_D$-C3) kleiner ist als der Brechungsindex des Kerns ($n_D$-C1). Vorzugsweise ist der Brechungsindex der Gesamtpfropfhülle ($n_D$-C2+$n_D$-C3) um wenigstens 0,1 %, insbesondere um wenigstens 1,0 % kleiner als der Brechungsindex des Kerns ($n_D$-C1). Ferner muß darauf geachtet werden, daß der Betrag der Differenz aus Brechungsindex der Gesamtkomponente C ($n_D$-C) und dem der Gesamtmatrix ($n_D$-A+$n_D$-B) kleiner oder gleich 0,02, insbesondere kleiner oder gleich 0,015 ist.

In einer weiteren Ausführungsform sind die erfindungsgemäßen Formmassen darüber hinaus dadurch charakterisiert, daß der Betrag der Differenz zwischen dem Brechungsindex der Gesamtpfropfhülle ($n_D$-C2+$n_D$-C3) und dem des Kerns ($n_D$-C1) kleiner als 0,03 ist: [($n_D$-C2+$n_D$-C3)-$n_D$-C1] < 0,03. Vorzugsweise ist der Betrag der Differenz zwischen dem Brechungsindex der Gesamtpfropfhülle des Pfropfcopolymerisats C und dem des Kerns [($n_D$-C2+$n_D$-C3)-$n_D$-C1] kleiner als 0,03. Die Formmassen gemäß dieser Ausführungsform zeichnen sich durch einen besonders niedrigen Kantengelbstich aus.

Aus den erfindungsgemäßen thermoplastischen Formmassen können hauptsächlich durch Spritzgießen oder durch Formblasen Formteile hergestellt werden. Die thermoplastischen Formmassen können aber auch verpreßt, kalandriert, extrudiert oder vakuumgeformt werden. Die erfindungsgemäßen thermoplastischen Formmassen zeichnen sich insbesonders durch eine gute Spannungsrißbeständigkeit und Schlagzähigkeit aus und sind transparent. Weiterhin weisen sie einen sehr geringen Streulichtanteil und keine merkliche Vergilbung auf.

**Beispiele**

In den nachfolgenden erfindungsgemäßen Beispielen 1 bis 8 und den Vergleichsbeispielen V1 bis V10 wurden jeweils thermoplastische Formmassen hergestellt und folgende Eigenschaften ermittelt:

- Der Brechungsindex $n_D^{25}$ wurde mit einem Abbé-Refraktometer nach der Methode zur Messung der Brechungsindizes bei festen Körpern bestimmt (s. Ullmanns Encyklopädie der technischen Chemie, Band 2/1, S. 486, Herausgeber E. Foerst; Urban & Schwarzenberg, München-Berlin 1961).

- Schlagzähigkeit $a_N$, nach ISO 179

- Multiaxiale Zähigkeit $W_g$, nach ISO 6603-2

- Volumenfließfähigkeit MVI, nach DIN 53735

- Transmission t, nach DIN 5036 (2 mm)

- Trübung (Haze), nach DIN 5036 (2 mm)

- Gelbindex (Gelbstich) YI, nach ASTM-D 1925

- Kantengilb (Kantengelbstich), visuelle Beurteilung an 2 mm dicken Rundscheiben

Die Prüfung der Schlagzähigkeit $a_N$ erfolgte nach dem Charpy-Verfahren. Bei diesem Prüfungsverfahren wird ein auf zwei Stützen ruhender normierter Probekörper durch Auftreffen eines in seine Mitte zielenden Aufschlags zerstört oder geschädigt. Die für die Zerstörung bzw. Schädigung benötigte Arbeit (kJ) wird auf den kritischen Querschnitt ($m^2$) bezogen und als Schlagzähigkeit $a_N$ (Dimension $kJ/m^2$) bezeichnet.

Als Lichtdurchlässigkeit oder Transmission t (Dimension %) bezeichnet man das Verhältnis des von einer Probe durchgelassenen Lichtes zur Intensität des einfallenden Lichtes. Sie wurde in Abhängigkeit von der Wellenlänge in einem Bereich von 400 bis 900 nm an einem Probekörper mit einer Dicke von 2 mm bestimmt.

Durchsichtige Kunststoffe, bei denen die optische Klarheit für den Gebrauchswert wesentlich ist, werden auf ihre Trübung (haze) untersucht. Als Trübung oder Streulichtanteil (haze) (Dimension %) bezeichnet man den Teil des von einer Materialprobe durchgelassenen Lichtes, der von der Richtung des auf die Probe einfallenden Lichtstrahls aufgrund einer im Material stattfindenden Streuung abweicht. Die Trübung wurde an einem Probekörper mit einer Dicke von 2 mm bestimmt.

Der Gelbindex (Gelbstich) oder Yellownessindex YI basiert auf Farbmaßzahlen, die aus dem Transmissionsspektrum gemäß ASTM-D1925 berechnet werden. Dabei wird die Lichtart D65 und der Großfeldnornmlbeobachter zugrundegelegt.

Bestimmung des Quellungsindexes (QI) bzw. des Gelgehaltes der Grundstufen, d.h. des Kerns (C1):

0,3 g des kautschukartigen Kerns (C1) werden bei Raumtemperatur in 50 ml Toluol gelöst und 24 Stunden lang belassen. Nach dem Abziehen des Quellungsmittels wird das nasse Gel gewogen und biszur Gewichtskonstanz getrocknet. Danach ergibt sich der Quellungsindex QI als Quotient aus der Masse des nassen Gels zur Masse des trockenen Gels und der Gelgehalt als Quotient aus der Masse des trockenen Gels zur Einwaage mal 100 %.

Die mittlere Teilchengröße und die Teilchengrößenverteilung der Pfropfcopolymerisate ($C^a$) bis ($C^h$) wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugennlessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert derintegralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert.

In den erfindungsgemäßen Beispielen 1 bis 8 und den Vergleichsbeispielen V1 bis V10 wurden folgende Pfropfcopolymerisate (C) verwendet, deren Herstellung nachfolgend beschrieben wird:

Alle hierbei verwendeten Pfropfcopolymerisate wurden über die Grundstufe (I), (II) oder (III) hergestellt.

Grundstufe (I):

Eine Lösung aus 186 Gew.-Teilen Wasser und 0,4 Gew.-Teilen Paraffinsulfonat wurde mit Stickstoff inertisiert und mit einer Mischung aus 73 Gew.-Teilen Butadien, 27 Gew.-Teilen Styrol und 1 Gew.-Teil tert.-Dodecylmercaptan mit 0,2 Gew.-Teilen Kaliumperoxodisulfat bei 70°C unter Rühren versetzt. Man polymerisierte bis zu einem Umsatz von mindestens 95 %.

Der damit erhaltene Kern ($C1_I$) der Grundstufe (I) wies einen mittleren Teilchendurchmesser $d_{50}$ von 143 nm auf; sein in Toluol bestimmter Quellungsindex QI lag bei 23, sein Gelgehalt lag bei 88%.

Grundstufe (II):

Analog zur Grundstufe (I) wurde die Grundstufe (II) hergestellt, wobei aber anstelle der Mischung aus Butadien und Styrol nur Butadien verwendet wurde.

Der damit erhaltene Kern ($C1_{II}$) der Grundstufe (II) wies einen mittleren Teilchendurchmesser $d_{50}$ von 126 nm auf; sein in Toluol bestimmter Quellungsindex QI lag bei 25, sein Gelgehalt bei 85 %.

Grundstufe (III):

Analog zur Grundstufe(I) wurde eine Grundstufe (III) hergestellt, wobei aber die Mischung 76 Gew.-Teile Butadien und 24 Gew.-Teile Styrol enthielt.

Der damit erhaltene Kern (C1$_{III}$) der Grundstufe (III) wies einen mittleren Teilchendurchmesser d$_{50}$ von 135 nm auf; sein in Toluol bestimmter Quellenindex QI lag bei 23, sein Gelgehalt bei 87 %.

Aus den von den Grundstufen (I) und (II) erhaltenen Kernen C1$_I$ undC1$_{II}$ wurden durch zweistufige Pfropfcopolymerisation die Pfropfcopolymerisate (C$^a$) bis (C$^c$) hergestellt. Dieser Vorgang lief bei den erfindungsgemäßen Beispielen 1,2 und 3 und bei den Vergleichspolymerisaten CV1 bis CV7 wie nachfolgend beschrieben ab.

Dabei wurden folgende Abkürzungen verwendet.

| Bu | Butadien | MA | Methylacrylat |
|-----|----------|-----|----------------|
| S | Styrol | BDA | Butandioldiacrylat |
| MMA | Methylmethacrylat | BA | Butylacrylat |

Pfropfcopolymerisat C$^a$

Es wurden 200 Gew.-Teile der Grundstufe (I) vorgelegt, mit Stickstoff inertisiert und bei 70°C mit 10,4 Gew.-Teilen Styrol, 9,4 Gew.-Teilen MMA und 0,2 Gew.-Teilen BDA versetzt. Zu dieser Emulsion fügte man ferner 0,1 Gew.-Teile Paraffinsulfonat und 0,04 Gew.-Teile Kaliumperoxodisulfat in 10 Gew.-Teilen Wasser hinzu. Es resultierte die erste Pfropfhülle (C2$^a$).

Nach ca 15 Minuten fügte man noch 8 Gew.-Teile MMA und 2 Gew.-Teile BA hinzu und polymerisierte erneut 60 Minuten lang, wobei man die zweite Pfropfhülle (C3$^a$) erhielt.

Pfropfcopolymerisat C$^b$

Analog dem Pfropfcopolymerisat C$^a$ wurde unter den gleichen Bedingungen ein Pfropfcopolymerisat hergestellt, wobei diesmal pro 170 Gew.-Teile der Grundstufe (I) 10,4 Gew.-Teile Styrol, 9,4 Gew.-Teile MMA und 0,2 Gew.-Teile BDA zur Herstellung der ersten Pfropfhülle (C2$^b$) und 16 Gew.-Teile MMA und 4 Gew.-Teile BA zur Herstellung der zweiten Pfropfhülle (C3$^b$) verwendet wurden.

Pfropfcopolymerisat C$^c$

Analog dem Pfropfcopolymerisat C$^a$ wurde unter ansonsten gleichen Bedingungen ein Pfropfcopolymerisat hergestellt, wobei diesmal pro 200 Gew.-Teile der Grundstufe (I) 5,2 Gew.-Teile Styrol, 4,7 Gew.-Teile MMA und 0,1 Gew.-Teile BDA zur Herstellung der ersten Pfropfhülle (C2$^c$) und 16 Gew.-Teile MMA und 4 Gew.-Teile BA zur Herstellung der zweiten Pfropfhülle (C3$^c$) verwendet wurden.

Vergleichspolymerisat CV1

Analog dem erfindungsgemäßen Pfropfcopolymerisat C$^a$ wurde unter ansonsten gleichen Bedingungen ein Pfropfcopolymerisat (CV1) hergestellt, wobei jetzt aber pro 200 Gew.-Teile der Grundstufe (I) 13 Gew.-Teile Styrol, 11,7 Gew.-Teile MMA und 0,25 Gew.-Teile BDA zur Herstellung der ersten Pfropfhülle (C2$_{VI}$) und 4 Gew.-Teile MMA und 1 Gew.-Teile BA zur Herstellung einer zweiten Pfropfhülle (C3$_{VI}$) verwendet wurden.

Vergleichspolymerisat CV2

Analog dem erfindungsgemäßen Pfropfcopolymerisat C$^a$ wurde unter ansonsten gleichen Bedingungen ein Pfropfcopolymerisat (CV2) hergestellt, wobei jetzt aber pro 200 Gew.-Teile der Grundstufe (I) 2,6 Gew.-Teile Styrol, 2,35 Gew.-Teile MMA, 0,05 Gew.-Teile BDA, 0,025 Gew.-Teile Paraffinsulfonat und 0,01 Gew.-Teile Kaliumperoxodisulfat zur Herstellung einer ersten Pfropfhülle (C2$_{V2}$) unddanach 20 Gew.-Teile MMA und 5 Gew.-Teile BA zur Herstellung einer zweiten Pfropfhülle (C3$_{V2}$) verwendet wurden.

Vergleichspolymerisat CV3

200 Gew.-Teile der Grundstufe (I) wurden bei 70°C mit 13 Gew.-Teilen Styrol, 2 Gew.-Teilen BA und 15 Gew.-Teilen MMA versetzt und ansonsten analog zum Beispiel 1 auspolymerisiert. Auf die Herstellung einer zweiten Pfropfhülle (C3) wurde verzichtet.

Vergleichspolymerisat CV4

170 Gew.-Teile der Grundstufe (II) wurden bei 70°C mit 10,4 Gew.-Teilen MMA, 9,4 Gew.-Teilen Styrol, 0,2 Gew.-Teilen BDA, 0,1 Gew.-Teilen Paraffinsulfonat und 0,04 Gew.-Teilen Kaliumperoxodisulfat versetzt und auf diese Weise analog dem Beispiel 1 zur ersten Pfropfhülle ($C2_{V4}$) umgesetzt. Anschließend wurden bei 70°C der ersten Pfropfhülle ($C2_{V4}$) 10 Gew.-Teile Styrol und 10 Gew.-Teile MMA hinzupolymerisiert, wodurch eine zweite Pfropfhülle ($C3_{V4}$) resultierte.

Vergleichspolymerisat CV5

Analog dem erfindungsgemäßen Beispiel 1 wurde ein Pfropfcopolymerisat (CV5) hergestellt, wobei aber für die zweite Pfropfhülle nur 10 Gew.-Teile MMA verwendet wurde.

Vergleichspolymerisat CV6

170 Gew.-Teile der Grundstufe (II) wurden bei 70°C mit 18 Gew.-Teilen Styrol, 2 Gew.-Teilen BA und 0,2 Gew.-Teilen BDA versetzt. Zu dieser Emulsion fügte man ferner noch 0,1 Gew.-Teile Paraffinsulfonat und 0,04 Gew.-Teile Kaliumperoxodisulfat hinzu. Er resultierte eine erste Pfropfhülle ($C2_{V6}$).
Nach ca. 15 Minuten fügte man noch 10 Gew.-Teile Styrol und 10 Gew.-Teile MMA hinzu und polymerisierte erneut 60 Minuten lang, wobei man eine zweite Pfropfhülle ($C3_{V6}$) erhielt.

Vergleichspolymerisat CV7

155 Gew.-Teile der Grundstufe (I) wurden bei 70°C mit 0,12 Gew.-Teilen Paraffinsulfonat, 0,045 Gew.-Teilen Kaliumperoxodisulfat, 19,8 Gew.-Teilen Styrol und 2,2 Gew.-Teilen BA versetzt. Es resultierte eine erste Pfropfhülle ($C2_{V7}$). Anschließend wurden 23 Gew.-Teile MMA hinzugefügt, 60 Minuten lang polymerisiert, wobei man eine zweite Pfropfhülle ($C3_{V7}$) erhielt.
In den erfindungsgemäßen Pfropfcopolymerisat $C^a$ bis $C^c$ und den Vergleichspolymerisaten CV1 bis CV7 wurde jeweils noch 1 Stunde lang nachpolymerisiert.
Die dabei erhaltenen Pfropfcopolymerisate $C^a$ bis $C^c$ bzw. CV1 bis CV7 wurden danach durch Fällung isoliert und nach dem Waschen mit Wasser bei 60°C im Vakuum 24 Stunden lang getrocknet.
In der nachfolgenden Tabelle 1 sind die jeweiligen Zusammensetzungen der Pfropfcopolymerisate $C^a$ bis $C^c$ und CV1 bis CV7 dargestellt.

Tabelle 1

| - Zusammensetzung der Pfropfcopolymerisate ($C^a$) bis ($C^c$) und CV1 bis CV7 |
| --- |
| - jeweils in Gew.-Teilen - |
| $C^a$:    70 $C1_I$ ( Kern) aus 73 Bu und 27S<br>     20 $C2^a$ ( erste Pfropfhülle) aus 52S, 47 MMA und 1 BDA<br>     10 $C3^a$ ( zweite Pfropfhülle) aus 80 MMA und 20 BA |
| $C^b$:    60 $C1_I$<br>     20 $C2^b$ aus 52S, 47 MMA und 1 BDA<br>     20 $C3^b$ aus 80 MMA und 20 BA |
| $C^c$:    70 $C1_I$<br>     10 $C2^c$ aus 52S, 47 MMA, 1 BDA<br>     20 $C3^c$ aus 80 MMA und 20 BA |
| CV1:    70 $C1_I$ |

Tabelle 1   (fortgesetzt)

|  |  |
|---|---|
|  | 25 $C2_{V1}$ aus 52S, 47 MMA, 1 BDA |
|  | 5 $C3_{V1}$ aus 80 MMA und 20 BA |
| CV2: | 70 $C1_I$ |
|  | 5 $C2_{V2}$ aus 52S, 47 MMA, 1 BDA |
|  | 25 $C3_{V2}$ aus 80 MMA und 20 BA |
| CV3: | 70 $C1_I$ |
|  | 30 $C_2$ aus 43S, 50 MMA, 7 BA |
| CV4: | 60 $C1_I$ |
|  | 20 $C2_{V4}$ aus 47S, 52 MMA, 1BDA |
|  | 20 $C3_{V4}$ aus 50S, 50 MMA, $n_D$-C2<$n_D$-C3 |
| CV5 | 70$C1_I$ |
|  | 20 $C2_{V5}$ aus 52S, 47 MMA und 1 BDA |
|  | 10 $C3_{V5}$ aus 100 MMA |
| CV6: | 60 $C1_{II}$ aus 100 Bu |
|  | 20 $C2_{V6}$ aus 90S, 10BA und 1 BDA |
|  | 20 $C3_{V6}$ aus 50S und50 MMA |
| CV7: | 55 $C1_I$ |
|  | 22 $C2_{V7}$ aus 90S und 10 BA |
|  | 23 $C3_{V7}$ aus reinem MMA |

Anschließend wurde jeweils ein Pfropfcopolymerisat $C^a$ bis $C^c$ bzw. CV1 bis CV7 in einer Schmelze bei Temperaturen von 250°C mit den Komponenten (A1) und (B1) zu thermoplastischen Formmassen umgesetzt.

Die thermoplastischen Formmassen der erfindungsgemäßen Beispiele 1 bis 8 sowie der Vergleichsbeispiele V1 bis V10 waren jeweils Granulate aus den Komponenten (A1), (B1) und einem Pfropfcopolymerisat von ($C^a$) bis ($C^h$), die in der Schmelze bei Temperaturen von 250°C hergestellt wurden. Sie enthielten

- 28,16 Gew.-% eines Methylmethacrylat-Polymerisates (A1) hergestellt aus Methylmethacrylat (MMA) und Methylacrylat (MA) im Verhältnis 94:6 ($n_D25 = 1,492$, $M_w = 110.000$ g/mol);

- 35,84 Gew.-% eines Copolymerisats (B1), hergestellt aus Styrol und Acrylnitril im Verhältnis 81:19 (Gewichtsmittel $M_w = 250\ 000$ g/mol; $n_D25 = 1,575$) mit einer Viskositätszahl von 100, bestimmt in einer 0,5%-igen Lösung bei 23°C in Dimethylformamid;

- 36 Gew.-% eines Pfropfcopolymerisats ($C^a$) bis ($C^h$) bzw. CV1 bis CV10.

Die Komponenten (A1) und (B1) bildeten dabei die Matrix, die Komponente ($C^a$) bis ($C^h$) bzw. CV1 bis CV10 stellte den Kautschuk dar. Die Matrix wies einen Brechungsindex ($n_D$-A + $n_D$-B) von 1,5400 auf.

In der nachfolgenden Tabelle 2 sind für die erfindungsgemäßen Beispiele 1 bis 3 und für die Vergleichsbeispiele V1 bis V7 das jeweilige Mengenverhältnis (C2):(C3), die Brechungsindices der ersten Pfropfhülle ($n_D$-C2), der zweiten Pfropfhülle ($n_D$-C3) und dieder Gesamtpfropfhülle ($n_D$-C2+$n_D$-C3) sowie die jeweiligen Brechungsindices des Kerns ($n_D$-C1), der Gesamtkomponente C ($n_D$-C) und der Betrag der Differenz aus Brechungsindex der Gesamtkomponente C ($n_D$-C) und dem der Gesamtmatrix ($n_D$-A+$n_D$-B) aufgeführt.

Tabelle 2

| | (C2):(C3) | $n_D$-C2 | $n_D$-C3 | $n_D$-C2 +$n_D$-C3 | $n_D$-C1 | $n_D$-C | $n_D$-C -($n_D$-A+$n_D$-B) |
|---|---|---|---|---|---|---|---|
| | | | | | | | |
| Beispiel 1 | 2:1 | 1,5422 | 1,4844 | 1,5223 | 1,5394 | 1,5345 | 0,0055 |
| Beispiel 2 | 1:1 | 1,5422 | 1,4844 | 1,5133 | 1,5394 | 1,5289 | 0,0111 |
| Beispiel 3 | 1:2 | 1,5422 | 1,4844 | 1,5040 | 1,5394 | 1,5288 | 0,0112 |
| | | | | | | | |
| Vergleichsbeispiel V1 | 5:1 | 1,5422 | 1,4844 | 1,5324 | 1,5394 | 1,5373 | 0,0027 |
| Vergleichsbeispiel V2 | 1:5 | 1,5422 | 1,4844 | 1,4942 | 1,5394 | 1,5258 | 0,0142 |
| Vergleichsbeispiel V3 | - | 1,5321 | - | 1,5321 | 1,5394 | 1,5372 | 0,0028 |
| Vergleichsbeispiel V4 | 1:1 | 1,5370 | 1,5405 | 1,5487 | 1,5394 | 1,5431 | 0,0031 |
| Vergleichsbeispiel V5 | 2:1 | 1,5422 | 1,4890 | 1,5244 | 1,5394 | 1,5349 | 0,0051 |
| Vergleichsbeispiel V6 | 1:1 | 1,5939 | 1,5405 | 1,5672 | 1,5200 | 1,5389 | 0,0011 |
| Vergleichsbeispiel V7 | 1:1,05 | 1,5794 | 1,4890 | 1,5331 | 1,5394 | 1,5365 | 0,0035 |

EP 0 847 421 B1

In der nachfolgenden Tabelle 3 sind sowohl für die erfindungsgemäßen Beispiele 1 bis 3 als auch für die Vergleichsbeispiele V1 bis V7 die Schlagzähigkeit $a_N$, die multiaxiale Zähigkeit $W_g$, die Volumenßießfäbigkeit MVI, die Transmission t, die Trübung (Haze) und der Gelbindex (Gelbstich) YI aufgeführt.

Die erfindungsgemäßen Formmassen der Beispiele 1 bis 3 sind spannungsrißbeständig und besitzen bei einem hohem Zähigkeitsniveau und einem guten Fließverhalten eine Lichttransmission von über 88 % und einen Streulichtanteil von weniger als 4 %.

**Tabelle 3**

| | $a_N$ [kJ/m²] | Wg [Nm] | · [%] | haze [%] | YI | MVI 220°C/10kg [ml/g] |
|---|---|---|---|---|---|---|
| Beispiel 1 | 39.8 | 18 | 90 | 3.3 | 3.5 | 2.6 |
| Beispiel 2 | 36.0 | 15 | 90 | 1.9 | 2.7 | 2.9 |
| Beispiel 3 | 37.6 | 11.5 | 89.0 | 3.2 | 3.2 | 2.8 |
| Vergleichsbeispiel V1 | 31.9 | 10.7 | 82.3 | 8.5 | 7.1 | 2.1 |
| Vergleichsbeispiel V2 | 27.2 | 1.2 | 88.7 | 2.4 | 4.0 | 2.8 |
| Vergleichsbeispiel V3 | 39.9 | 20.7 | 87.8 | 5.8 | 5.9 | 1.1 |
| Vergleichsbeispiel V4 | 44.8 | 4.3 | 85.5 | 5.7 | 6.5 | 2.6 |
| Vergleichsbeispiel V5 | 32.6 | 17.8 | 83.7 | 12.0 | 8.6 | 1.4 |
| Vergleichsbeispiel V6 | 41.7 | 14.3 | 71.1 | 25.2 | 17.9 | 1.7 |
| Vergleichsbeispiel V7 | 42.5 | 6.1 | 86.3 | 3.7 | 5.6 | 2.3 |

In den erfindungsgemäßen Beispielen 4 bis 8 sowie dem Vergleichsbeispiel V8 wurden die in der nachfolgenden Tabelle 4 beschriebenen Mengen an den Grundstufen (I), (II) oder (III) vorgelegt und nach Inertisierung mit Stickstoff bei 70°C mit den in der Tabelle l aufgeführten Comonomeren der ersten Pfropfhülle (C2) versetzt, wobei bzgl. der Pfropfcomonomermenge 0,5 Gew.-Teile Paraffinsulfonat und 0,2 Gew.-Teile Kaliumperoxodisulfat hinzugefügt wurden. Nach 15 Minuten gab man die in der nachfolgenden Tabelle 4 beschriebenen Comonomere der zweiten Pfropfhülle (C3) hinzu und polymerisierte bis zu einem Umsatz von mindestens 98 %.

Tabelle 4

| Herstellung der Pfropfcopolymerisate $C^d$ bis $C^h$ und CV8 bis CV10 | | | | | | | | | | |
|---|---|---|---|---|---|---|---|---|---|---|
| erfindungsgemäß | zum Vergleich | Grundstufe (C1) | | 1. Pfropfhülle (C2) | | | | 2. Pfropfhülle (C3) | | |
| | | Nr. | Menge | S | MMA | BA | BDA | MMA | BA | S |
| | | | | | | | | | | |
| $C^d$ | | (I) | 226 | 5.7 | 5.2 | | 0.1 | 8 | 2 | |
| $C^e$ | | (I) | 200 | 10 | 9.8 | | 0.2 | 8 | 2 | |
| $C^f$ | | (I) | 200 | 14 | 5.8 | | 0.2 | 8 | 2 | |
| $C^g$ | | (I) | 200 | 16 | 3.8 | | 0.2 | 8 | 2 | |
| $C^h$ | | (I) | 170 | 12.5 | 12.3 | | 0.2 | 13.5 | 1.5 | |
| | | | | | | | | | | |
| | CV5 | (I) | 200 | 10.4 | 9.4 | | 0.2 | 10 | | |
| | CV6 | (II) | 170 | 18 | | 1.8 | 0.2 | 10 | | 10 |
| | CV8 | (III) | 143 | 30 | | | | 19.6 | 0.4 | |

In der Tabelle 5 sind jeweils die Mengen der Grundstufen bzw. der Comonomere in Gew.-Teilen angegeben.

Die dabei erhaltenen Pfropfcopolymerisate wurden danach durch Fällung isoliert und nach dem Waschen mit Wasser bei 60°C im Vakuum 24 Stunden lang getrocknet.

Anschließend wurden die Pfropfcopolymerisate in einer Schmelze bei Temperaturen von 250°C mit den Komponenten (A1) und (B1) zu thermoplastischen Formmassen umgesetzt.

In der nachfolgenden Tabelle 5 sind die jeweiligen Zusammensetzungen der Pfropfcopolymerisate $C^d$ bis $C^h$ und CV8 bis CV10 dargestellt.

## Tabelle 5

Zusammensetzung der Pfropfcopolymerisate $(C^d)$ bis $(C^h)$ und CV8 bis CV10

- jeweils in Gew.-Teilen -

$C^d$: 79 $C1_I$ ($\triangleq$ Kern) aus 73 Bu und 27 S

11 $C2^d$ ($\triangleq$ erste Pfropfhülle) aus 52S, 47MMA und 1 BDA

10 $C3^d$ ($\triangleq$ zweite Pfropfhülle) aus 80 MMA und 20 BA

$C^e$: 70 $C1_I$

20 $C2^e$ aus 50 S, 49 MMA und 1 BDA

10 $C3^e$ aus 80 MMA und 20 BA

$C^f$: 70 $C1_I$

20 $C2^f$ aus 70 S, 29 MMA und 1 BDA

10 $C3^f$ aus 80 MMA und 20 BA

$C^g$: 70 $C1_I$

20 $C2^g$ aus 80 S, 19 MMA und 1 BDA

10 $C3^g$ aus 80 MMA und 20 BA

$C^h$: 60 $C1_I$

25 $C2^h$ aus 50 S, 49 MMA und 1 BDA

15 $C3^h$ aus 90 MMA und 10 BA

CV8: 50 $C1_{III}$ aus 76 Bu und 24 S

30 $C2_{V8}$ aus 30 S

20 $C3_{V8}$ aus 98 MMA und 2 BA

In der nachfolgenden Tabelle 6 sind für die erfindungsgemäßen Beispiele 4 bis 8 und für die Vergleichsbeispiele V5, V6 und V8 die Mengenverhältnisse zwischen Styrol und Methylmethacrylat, der Betrag der Differenz zwischen dem Brechungsindex der Gesamtpfropfhülle C2 + C3 ($n_D$-C2 + $n_D$-C3) und dem des Kerns C1 ($n_D$-C1) und der Betrag der Differenz aus Brechungsindex der Gesamtkomponente C ($n_D$-C) und dem der Gesamtmatrix A + B ($n_D$-A + $n_D$-B) aufgeführt.

Tabelle 6

|  | Mengenverhältnis Styrol : MMA | ($n_D$-C2 + $n_D$-C3)-($n_D$-C1) | ($n_D$-C)-($n_D$-A + $n_D$-B) |
|---|---|---|---|
|  |  |  |  |
| Beispiel 4 | 27 : 73 | 0,025 | 0,006 |
| Beispiel 5 | 17 : 83 | 0,018 | 0,006 |
| Beispiel 6 | 46 : 54 | 0,004 | 0,002 |
| Beispiel 7 | 53 : 47 | 0,008 | 0,000 |
| Beispiel 8 | 31 : 69 | 0,019 | 0,008 |
|  |  |  |  |
| Vergleichsbeispiel V5 | 35 : 65 | 0,015 | 0,005 |
| Vergleichsbeispiel V6 | 45 : 55 | 0,047 | 0,001 |
| Vergleichsbeispiel V8 | 60 : 40 | 0,013 | 0,004 |

In der nachfolgenden Tabelle 7 sind sowohl für die erfindungsgemäßen Beispiele 4 bis 8 als auch für die Vergleichsbeispiele V5, V6 und V8 die Schlagzähigkeit $a_N$, die multiaxiale Zähigkeit Wg, die Transmission t, die Trübung (Haze), der Yellowness-Index (Gelbindex) YI, der Kantengilb und die Volumenfließfähigkeit MVI aufgeführt.

Die erfindungsgemäßen Formmassen der Beispiele 4 bis 8 sind schlagzäh, transparent, fließfähig und weisen eine geringe Trübung, einen geringen Gelbindex und einen geringen Kantengilb auf.

## Tabelle 7

| | $a_N$ [kJ/M$^2$] | Wg [N/M] | t [%] | Haze [%] | YI | Kantengilb* | MVI 220°C/10kg [ml/g] |
|---|---|---|---|---|---|---|---|
| | | | | | | | |
| Beispiel 4 | 39,8 | 14,5 | 88,5 | 3,5 | 3,0 | 0-1 | 2,9 |
| Beispiel 5 | 37,3 | 17,5 | 89,8 | 3,4 | 3,5 | 1 | 2,8 |
| Beispiel 6 | 42,0 | 16,4 | 88,5 | 2,9 | 3,1 | 0 | 2,6 |
| Beispiel 7 | 42,5 | 14,6 | 89,3 | 3,5 | 2,7 | 0 | 2,8 |
| Beispiel 8 | 38,7 | 14,8 | 88,8 | 2,4 | 3,4 | 0 | 2,4 |
| | | | | | | | |
| Vergleichsbeispiel V5 | 32,6 | 17,8 | 83,7 | 12,0 | 8,6 | Δ | 1,4 |
| Vergleichsbeispiel V6 | 41,7 | 14,3 | 71,1 | 25,2 | 17,9 | Δ | 1,7 |
| Vergleichsbeispiel V8 | 37,6 | 12,1 | 85,1 | 4,6 | 6,4 | 5 | 1,8 |

* Kantengilb, Wahrnehmung visuell     0 nicht wahrnehmbar
1 kaum wahrnehmbar
3 mäßig wahrnehmbar
5 gut wahrnehmbar

Δ wegen des schlechten Niveaus der allg. optischen Eigenschaften ist der Kantengilb nicht zu beurteilen

EP 0 847 421 B1

**Patentansprüche**

1.  Thermoplastische Formmassen, enthaltend eine Mischung aus

    (A) 10 bis 60 Gew.-% eines Methylmethacrylat-Polymerisates, erhältlich durch Polymerisation einer Mischung, bestehend aus

    (A1) 90 bis 100 Gew.-%, bezogen auf (A), Methylmethacrylat, und

    (A2) 0 bis 10 Gew.-%, bezogen auf (A), eines $C_1$-$C_8$-Alkylesters der Acrylsäure

    und

    (B) 10 bis 70 Gew.-% eines Copolymerisates, erhältlich durch Polymerisation einer Mischung, bestehend aus

    (B1) 75 bis 88 Gew.-%, bezogen auf (B), eines vinylaromatischen Monomeren und

    (B2) 12 bis 25 Gew.-%, bezogen auf (B), eines Vinylcyanids

    und

    (C) 15 bis 50 Gew.-% eines Pfropfcopolymerisates, erhältlich aus

    (C1) 40 bis 80 Gew.-%, bezogen auf (C), eines Kerns, erhältlich durch Polymerisation eines Monomerengemisches, bestehend aus

    (C11) 65 bis 90 Gew.-% eines 1,3-Diens und

    (C12) mindestens 10 Gew.-% eines vinylaromatischen Monomeren

    und

    (C2) 10 bis 30 Gew.-%, bezogen auf (C), einer ersten Pfropfhülle, erhältlich durch Polymerisation eines Monomerengemisches, bestehend aus (wobei sich die einzelnen Prozentangaben aus C21, C22 und C23 zu 100 Gew.-% addieren)

    (C21) 30 bis 60 Gew.-% eines vinylaromatischen Monomeren

    (C22) 40 bis 60 Gew.-% eines $C_1$-$C_8$-Alkylesters der Methacrylsäure und

    (C23) 0 bis 2 Gew.-% eines vernetzenden Monomeren

    und

    (C3) 10 bis 30 Gew.-%, bezogen auf (C), einer zweiten Pfropfhülle, erhältlich durch Polymerisation eines Monomerengemisches, bestehend aus

    (C31) 70 bis 98 Gew.-% eines $C_1$-$C_8$-Alkylesters der Methacrylsäure und

    (C32) 2 bis 30 Gew.-% eines $C_1$-$C_8$-Alkylesters der Acrylsäure,

    wobei sich die einzelnen Prozentangaben von A, B und C in der Mischung zu 100 Gew.-% addieren und

    (D) gegebenenfalls üblichen Zusatzstoffen in Mengen von bis zu 20 Gew.-%, bezogen auf die Summe der Komponenten A,B und C,

mit den Maßgaben, daß das Mengenverhältnis von (C2) zu (C3) im Bereich von 2:1 bis 1:2 liegt, der Brechungsindex der ersten Pfropfhülle ($n_D$-C2) größer als der Brechungsindex der zweiten Pfropfhülle ($n_D$-C3) ist und der

Brechungsindex der Gesamtpropfhülle ($n_D$-C2+$n_D$-C3) kleiner als der Brechungsindex des Kerns ($n_D$-C1) ist, wobei der Betrag der Differenz aus Brechungsindex der Gesamtkomponente C ($n_D$-C) und dem der Gesamtmatrix ($n_D$-A+$n_D$-B) kleiner oder gleich 0,02 ist.

2. Thermoplastische Formmassen nach Anspruch 1, worin der Betrag der Differenz zwischen dem Brechungsindex der Gesamtpropfhülle des Pfropfcopolymerisats C und dem des Kerns [($n_D$-C2+$n_D$-C3)-$n_D$-C1] kleiner als 0,03 ist.

3. Thermoplastische Formmassen nach Anspruch 1 oder 2, enthaltend eine Mischung aus

(A) 20 bis 50 Gew.-% eines Methylmethacrylat-Polymerisats aus einem Methylmethacrylat (A1) und einem $C_1$-$C_8$-Alkylester der Acrylsäure (A2) und

(B) 20 bis 40 Gew.-% eines Copolymerisats aus einem vinylaromatischen Monomeren (B1) und Vinylcyanid (B2) und

(C) 20 bis 40 Gew.-% eines Pfropfcopolymerisats aus einem Kern (C1), einer ersten Pfropfhülle (C2) und einer zweiten Pfropfhülle (C3)

wobei sich die Prozentangaben von A,B und C zu 100 Gew.-% addieren und

(D) gegebenenfalls üblichen Zusatzstoffen.

4. Thermoplastische Formmassen nach einem der Ansprüche 1 bis 3, wobei als vinylaromatisches Monomeres Styrol eingesetzt wird.

5. Thermoplastische Formmassen nach einem der Ansprüche 1 bis 4, wobei das Pfropfcopolymerisat (C) einen Quellungsindex QI von 10 bis 40 aufweist.

6. Verfahren zur Herstellung der thermoplastischen Formmassen gemäß einem der Ansprüche 1 bis 5, dadurch gekennzeichnet, daß man

(A) 10 bis 60 Gew.-% eines Methylmethacrylat-Polymerisates, erhältlich durch Polymerisation einer Mischung, bestehend aus

(A1) 90 bis 100 Gew.-%, bezogen auf (A), Methylmethacrylat und

(A2) 0 bis 10 Gew.-%, bezogen auf (A), eines $C_1$-$C_8$-Alkylesters der Acrylsäure und

(B) 10 bis 70 Gew.-% eines Copolymerisates, erhältlich durch Polymerisation einer Mischung, bestehend aus

(B1) 75 bis 88 Gew.-%, bezogen auf (B), eines vinylaromatischen Monomeren und

(B2) 12 bis 25 Gew.-%, bezogen auf (B), eines Vinylcyanids

und

(C) 15 bis 50 Gew.-% eines Pfropfcopolymerisates, erhältlich aus

(C1) 40 bis 80 Gew.-%, bezogen auf (C), eines Kerns, erhältlich durch Polymerisation eines Monomerengemisches, bestehend aus

(C11) 65 bis 90 Gew.-% eines 1,3-Diens und

(C12) mindestens 10 Gew.-% eines vinylaromatischen Monomeren

und

(C2) 10 bis 30 Gew.-%, bezogen auf (C), einer ersten Pfropfhülle, erhältlich durch Polymerisation eines Monomerengemisches, bestehend aus (wobei sich die einzelnen Prozentangaben aus C21, C22 und C23 zu 100 Gew.-% addieren)

(C21) 30 bis 60 Gew.-% eines vinylaromatischen Monomeren

(C22) 40 bis 60 Gew.-% eines $C_1$-$C_8$-Alkylesters der Methacrylsäure und

(C23) 0 bis 2 Gew.-% eines vernetzenden Monomeren

und

(C3) 10 bis 30 Gew.-%, bezogen auf (C), einer zweiten Pfropfhülle, erhältlich durch Polymerisation eines Monomerengemisches, bestehend aus

(C31) 70 bis 98 Gew.-% eines $C_1$-$C_8$-Alkylesters der Methacrylsäure und

(C32) 2 bis 30 Gew.-% eines $C_1$-$C_8$-Alkylesters der Acrylsäure,

wobei sich die Prozentangaben von A,B und C zu 100 Gew.-% addieren und

(D) gegebenenfalls üblichen Zusatzstoffen in Mengen von bis zu 20 Gew.-%, bezogen auf die Summe der Komponenten A, B und C,

mit den Maßgaben, daß das Mengenverhältnis von (C2) zu (C3) im Bereich von 2:1 bis 1:2 liegt, der Brechungsindex der ersten Pfropfhülle ($n_D$-C2) größer als der Brechungsindex der zweiten Pfropfhülle ($n_D$-$C_3$) ist und der Brechungsindex der Gesamtpfropfhülle ($n_D$-C2+$n_D$-C3) kleiner als der Brechungsindex des Kerns ($n_D$-C1) ist, wobei der Betrag der Differenz aus Brechungsindex der Gesamtkomponente C ($n_D$-C) und dem der Gesamtmatrix ($n_D$-A+$n_D$-B) kleiner oder gleich 0,02 ist,
durch Vermischen der Komponente (A), (B), (C) und gewünschtenfalls (D) in der Schmelze bei Temperaturen von 200 bis 300°C herstellt.

7. Verwendung der thermoplastischen Formmassen gemäß einem der Ansprüche 1 bis 5 zur Herstellung von Formkörpern.

8. Formkörper, erhältlich aus einer der thermoplastischen Formmassen gemäß einem der Ansprüche 1 bis 5.

**Claims**

1. A thermoplastic molding material comprising a mixture of

(A) from 10 to 60% by weight of a methyl methacrylate polymer obtainable by polymerizing a mixture consisting of

(A1) from 90 to 100% by weight, based on (A), of methyl methacrylate and

(A2) from 0 to 10% by weight, based on (A), of a $C_1$-$C_8$-alkyl ester of acrylic acid

and

(B) from 10 to 70% by weight of a copolymer obtainable by polymerizing a mixture consisting of

(B1) from 75 to 88% by weight, based on (B), of a vinylaromatic monomer and

(B2) from 12 to 25% by weight, based on (B), of a vinyl cyanide

and

(C) from 15 to 50% by weight of a graft copolymer obtainable from

(C1) from 40 to 80% by weight, based on (C), of a core obtainable by polymerizing a monomer mixture consisting of

(C11) from 65 to 90% by weight of a 1,3-diene and (C12) at least 10% by weight of a vinylaromatic monomer

and

(C2) from 10 to 30% by weight, based on (C), of a first graft shell obtainable by polymerizing a monomer mixture consisting of (the individual stated percentages of C21, C22 and C23 summing to 100% by weight)

(C21) from 30 to 60% by weight of a vinylaromatic monomer,

(C22) from 40 to 60% by weight of a $C_1$-$C_8$-alkyl ester of methacrylic acid and

(C23) from 0 to 2% by weight of a crosslinking monomer

and

(C3) from 10 to 30% by weight, based on (C), of a second graft shell obtainable by polymerizing a monomer mixture consisting of

(C31) from 70 to 98% by weight of a $C_1$-$C_8$-alkyl ester of methacrylic acid and

(C32) from 2 to 30% by weight of a $C_1$-$C_8$-alkyl ester of acrylic acid,

the individual stated percentages of A, B and C in the mixture summing to 100% by weight, and

(D) if required, conventional additives in amounts of up to 20% by weight, based on the sum of the components A, B and C,

with the provisos that the ratio of (C2) to (C3) is from 2:1 to 1:2, the refractive index of the first graft shell ($n_D$-C2) is greater than the refractive index of the second graft shell ($n_D$-C3) and the refractive index of the total graft shell ($n_D$-C2+$n_D$-C3) is less than the refractive index of the core ($n_D$-C1), the magnitude of the difference between the refractive index of the total component C ($n_D$-C) and that of the total matrix ($n_D$-A+$n_D$-B) being less than or equal to 0.02.

2. A thermoplastic molding material as claimed in claim 1, wherein the magnitude of the difference between the refractive index of the total graft shell of the graft copolymer C and that of the core [($n_D$-C2+$n_D$-C3)-$n_D$-C1] is less than 0.03.

3. A thermoplastic molding material as claimed in claim 1 or 2, comprising a mixture of

(A) from 20 to 50% by weight of a methyl methacrylate polymer comprising a methyl methacrylate (A1) and a $C_1$-$C_8$-alkyl ester of acrylic acid (A2) and

(B) from 20 to 40% by weight of a copolymer of a vinylaromatic monomer (B1) and vinyl cyanide (B2) and

(C) from 20 to 40% by weight of a graft copolymer comprising a core (C1), a first graft shell (C2) and a second graft shell (C3),

the stated percentages of A, B and C summing to 100% by weight, and

(D) if required, conventional additives.

4. A thermoplastic molding material as claimed in any of claims 1 to 3, wherein the vinylaromatic monomer employed is styrene.

5. A thermoplastic molding material as claimed in any of claims 1 to 4, wherein the graft copolymer (C) has a swelling index SI of from 10 to 40.

6. A process for the preparation of a thermoplastic molding material as claimed in any of claims 1 to 5, wherein

(A) from 10 to 60% by weight of a methyl methacrylate polymer obtainable by polymerizing a mixture consisting of

(A1) from 90 to 100% by weight, based on (A), of methyl methacrylate and

(A2) from 0 to 10% by weight, based on (A), of a $C_1$-$C_8$-alkyl ester of acrylic acid

and

(B) from 10 to 70% by weight of a copolymer obtainable by polymerizing a mixture consisting of

(B1) from 75 to 88% by weight, based on (B), of a vinylaromatic monomer and

(B2) from 12 to 25% by weight, based on (B), of a vinyl cyanide

and

(C) from 15 to 50% by weight of a graft copolymer obtainable from

(C1) from 40 to 80% by weight, based on (C), of a core obtainable by polymerizing a monomer mixture consisting of

(C11) from 65 to 90% by weight of a 1,3-diene and

(C12) at least 10% by weight of a vinylaromatic monomer

and

(C2) from 10 to 30% by weight, based on (C), of a first graft shell obtainable by polymerizing a monomer mixture consisting of (the individual stated percentages of C21, C22 and C23 summing to 100% by weight)

(C21) from 30 to 60% by weight of a vinylaromatic monomer,

(C22) from 40 to 60% by weight of a $C_1$-$C_8$-alkyl ester of methacrylic acid and

(C23) from 0 to 2% by weight of a crosslinking monomer

and

(C3) from 10 to 30% by weight, based on (C), of a second graft shell obtainable by polymerizing a monomer mixture consisting of

(C31) from 70 to 98% by weight of a $C_1$-$C_8$-alkyl ester of methacrylic acid and

(C32) from 2 to 30% by weight of a $C_1$-$C_8$-alkyl ester of acrylic acid,

the stated percentages of A, B and C summing to 100% by weight, and

(D) if required, conventional additives in amounts of up to 20% by weight, based on the sum of the components A, B and C,

with the provisos that the ratio of (C2) to (C3) is from 2:1 to 1:2, the refractive index of the first graft shell ($n_D$-C2) is greater than the refractive index of the second graft shell ($n_D$-C3) and the refractive index of the total graft shell ($n_D$-C2+$n_D$-C3) is less than the refractive index of the core ($n_D$-C1), the magnitude of the difference between the refractive index of the total component C ($n_D$-C) and that of the total matrix ($n_D$-A+$n_D$-B) being less than or equal to 0.02,

are mixed in the melt at from 200 to 300°C.

7. Use of a thermoplastic molding material as claimed in any of claims 1 to 5 for the production of moldings.

8. A molding obtainable from a thermoplastic molding material as claimed in any of claims 1 to 5.


**Revendications**

1. Masses de moulage thermoplastiques, comportant un mélange

(A) de 10 à 60% en poids d'un polymère de méthacrylate de méthyle, que l'on peut obtenir par polymérisation d'un mélange, constitué

(A1) de 90 à 100% en poids, par rapport à (A), de méthacrylate de méthyle, et
(A2) de 0 à 10% en poids, par rapport à (A), d'un ester alkylique en $C_1$-$C_8$ de l'acide acrylique,

et
(B) de 10 à 70% en poids d'un copolymère, que l'on peut obtenir par polymérisation d'un mélange, constitué

(B1) de 75 à 88% en poids, par rapport à (B), d'un monomère vinylaromatique, et
(B2) de 12 à 25% en poids, par rapport à (B), d'un cyanure de vinyle,

et
(C) de 15 à 50% en poids d'un copolymère de greffage, que l'on peut obtenir à partir

(C1) de 40 à 80% en poids, par rapport à (C), d'un noyau, qui peut être obtenu par polymérisation d'un mélange de monomères, constitué

(C11) de 65 à 90% en poids d'un 1,3-diène, et
(C12) d'au moins 10 à 35% en poids d'un monomère vinylaromatique,

et
(C2) de 10 à 30% en poids, par rapport à (C), d'une première enveloppe de greffage, qui peut être obtenue par polymérisation d'un mélange de monomères, constitué (les différentes indications en pour-cent de C21, C22 et C23 totalisant 100% en poids),

(C21) de 30 à 60% en poids d'un monomère vinylaromatique,
(C22) de 40 à 60% en poids d'un ester alkylique en $C_1$-$C_8$ de l'acide méthacrylique, et
(C23) de 0 à 2% en poids d'un monomère réticulant, et

(C3) de 10 à 30% en poids, par rapport à (C), d'une deuxième enveloppe de greffage, que l'on peut obtenir par polymérisation d'un mélange de monomères, constitué

(C31) de 70 à 98% en poids d'un ester alkylique en $C_1$-$C_8$ de l'acide méthacrylique, et
(C32) de 2 à 30% en poids d'un ester alkylique en $C_1$-$C_8$ de l'acide acrylique,

les différentes indications en pour-cent de A, B et C dans le mélange totalisant 100% en poids, et
(D) éventuellement d'additifs courants en des quantités allant jusqu'à 20% en poids, par rapport à la somme des composants A, B et C,

avec les conditions que les proportions entre (C2) et (C3) soient de l'ordre de 2/1 à 1/2, que l'indice de réfraction de la première enveloppe de greffage ($n_D$-C2) soit supérieur à l'indice de réfraction de la deuxième enveloppe de greffage($n_D$-C3) et que l'indice de réfraction de l'enveloppe de greffage totale ($n_D$-C2+$n_D$-C3) soit plus petit que l'indice de réfraction du noyau ($n_D$-C1), le montant de la différence entre l'indice de réfraction du composant global C ($n_D$-C) et celui de la matrice globale ($n_D$-A+$n_D$-B) étant plus petit ou égal à 0,02.

2.  Masses de moulage thermoplastiques suivant la revendication 1, dans lesquelles le montant de la différence entre l'indice de réfraction de l'enveloppe de greffage totale du copolymère de greffage C et celui du noyau [($n_D$-C2+$n_D$-C3)-$n_D$-C1] est plus petit que 0,03.

3.  Masses de moulage thermoplastiques suivant l'une des revendications 1 et 2, comportant un mélange

    (A) de 20 à 50% en poids d'un polymère de méthacrylate de méthyle à base d'un méthacrylate de méthyle (A1) et d'un ester alkylique en $C_1$-$C_8$ de l'acide acrylique (A2), et
    (B) de 20 à 40% en poids d'un copolymère d'un monomère vinylaromatique (B1) et de cyanure de vinyle (B2), et
    (C) de 20 à 40% en poids d'un copolymère de greffage à base d'un noyau (C1), d'une première enveloppe de greffage (C2) et d'une deuxième enveloppe de greffage (C3),
       les indications en pour-cent de A, B et C totalisant 100% en poids, et
    (D) éventuellement d'additifs courants.

4.  Masses de moulage thermoplastiques suivant l'une des revendications 1 à 3, dans lesquelles on met en oeuvre du styrène comme monomère vinylaromatique.

5.  Masses de moulage thermoplastiques suivant l'une des revendications 1 à 4, dans lesquelles le copolymère de greffage (C) présente un indice de gonflement QI de 10 à 40.

6.  Procédé de préparation de masses de moulage thermoplastiques suivant l'une des revendications 1 à 5, caractérisé en ce qu'on met en oeuvre

    (A) de 10 à 60% en poids d'un polymère de méthacrylate de méthyle, que l'on peut obtenir par polymérisation d'un mélange, constitué

       (A1) de 90 à 100% en poids, par rapport à (A), de méthacrylate de méthyle, et
       (A2) de 0 à 10% en poids, par rapport à (A), d'un ester alkylique en $C_1$-$C_8$ de l'acide acrylique, et

    (B) de 10 à 70% en poids d'un copolymère, que l'on peut obtenir par polymérisation d'un mélange, constitué

       (B1) de 75 à 88% en poids, par rapport à (B), d'un monomère vinylaromatique, et
       (B2) de 12 à 25% en poids, par rapport à (B), d'un cyanure de vinyle,

          et
    (C) de 15 à 50% en poids d'un copolymère de greffage, que l'on peut obtenir à partir

       (C1) de 40 à 80% en poids, par rapport à (C), d'un noyau, que l'on peut obtenir par polymérisation d'un mélange de monomères, constitué

          (C11) de 65 à 90% en poids d'un 1,3-diène, et
          (C12) d'au moins 10 à 35% en poids d'un monomère vinylaromatique,
             et

       (C2) de 10 à 30% en poids, par rapport à (C), d'une première enveloppe de greffage, que l'on peut obtenir par polymérisation d'un mélange de monomères, constitué (les différentes indications en pour-cent de C21, C22 et C23 totalisant 100% en poids),

          (C21) de 30 à 60% en poids d'un monomère vinylaromatique,
          (C22) de 40 à 60% en poids d'un ester alkylique en $C_1$-$C_8$ de l'acide méthacrylique, et
          (C23) de 0 à 2% en poids d'un monomère réticulant,
          et

       (C3) de 10 à 30% en poids, par rapport à (C), d'une deuxième enveloppe de greffage, que l'on peut obtenir par polymérisation d'un mélange de monomères, constitué

(C31) de 70 à 98% en poids d'un ester alkylique en $C_1$-$C_8$ de l'acide méthacrylique, et
(C32) de 2 à 30% en poids d'un ester alkylique en $C_1$-$C_8$ de l'acide acrylique,

les indications en pour-cent de A, B et C totalisant 100% en poids, et
(D) éventuellement d'additifs courants en des quantités allant jusqu'à 20% en poids, par rapport à la somme des composants A, B et C,

avec les conditions que les proportions entre (C2) et (C3) soient de l'ordre de 2/1 à 1/2, que l'indice de réfraction de la première enveloppe de greffage ($n_D$-C2) soit supérieur à l'indice de réfraction de la deuxième enveloppe de greffage($n_D$-C3) et que l'indice de réfraction de l'enveloppe de greffage totale ($n_D$-C2+$n_D$-C3) soit plus petit que l'indice de réfraction du noyau ($n_D$-C1), le montant de la différence entre l'indice de réfraction du composant global C ($n_D$-C) et celui de la matrice globale ($n_D$-A+$n_D$-B) étant plus petit ou égal à 0,02,

et en ce qu'on réalise la préparation par mélange des composants (A), (B), (C) et éventuellement (D) dans la masse fondue à des températures de 200 à 300°C.

7. Utilisation de masses de moulage thermoplastiques suivant l'une des revendications 1 à 5, pour la préparation de corps façonnés.

8. Corps façonnés, que l'on peut obtenir à partir d'une des masses de moulage thermoplastiques suivant l'une des revendications 1 à 5.